(19) Europäisches Patentamt
European Patent Office
Office européen des brevets

(11) **EP 4 243 303 B1**

(12) **EUROPEAN PATENT SPECIFICATION**

(45) Date of publication and mention
of the grant of the patent:
**03.06.2026 Bulletin 2026/23**

(51) International Patent Classification (IPC):
*H04B 17/10* (2015.01)   *H04W 52/36* (2009.01)
*H04B 7/04* (2017.01)   *H04W 52/14* (2009.01)

(21) Application number: **23160949.6**

(22) Date of filing: **09.03.2023**

(52) Cooperative Patent Classification (CPC):
**H04W 52/367; H04B 17/102;** H04W 52/146;
Y02D 30/70

(54) **WIRELESS ELECTRONIC DEVICE WITH TOTAL EXPOSURE RATIO (TER) CONTROL AND OPERATION METHOD THEREOF**

DRAHTLOSE ELEKTRONISCHE VORRICHTUNG MIT STEUERUNG DES GESAMTBELICHTUNGSVERHÄLTNISSES (TER) UND BETRIEBSVERFAHREN DAFÜR

DISPOSITIF ÉLECTRONIQUE SANS FIL AVEC COMMANDE DE RAPPORT D'EXPOSITION TOTAL (TER) ET SON PROCÉDÉ DE FONCTIONNEMENT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **10.03.2022 KR 20220030329**
**21.06.2022 KR 20220075776**

(43) Date of publication of application:
**13.09.2023 Bulletin 2023/37**

(73) Proprietor: **Samsung Electronics Co., Ltd.**
**Suwon-si, Gyeonggi-do 16677 (KR)**

(72) Inventors:
• **LEE, Gangminh**
**16677 Suwon-si (KR)**
• **YU, Hyunseok**
**16677 Suwon-si (KR)**

(74) Representative: **Marks & Clerk LLP**
**15 Fetter Lane**
**London EC4A 1BW (GB)**

(56) References cited:
**US-A1- 2020 015 171**

## Description

<u>Technical Field</u>

The present disclosure relates to controlling a total exposure ratio (TER) in a wireless electronic device.

<u>Discussion of Related Art</u>

A wireless electronic device may transmit a radio frequency (RF) signal through an antenna to communicate with another device. The electromagnetic waves produced by the transmitted RF signal may have a harmful effect on the human body. To reduce the harmful effect of electromagnetic waves, an authorized agency has regulated a TER measured when the electronic device transmits an RF signal. Therefore, when transmitting an RF signal, the electronic device must satisfy a TER regulation condition. The TER may be calculated by an equation combining Specific Absorption Ratio (SAR) measurements and power density (PD) measurements after normalizing to their respective limits.

For the electronic device to satisfy the TER regulation condition, transmit power at which the electronic device transmits an RF signal may need to be reduced. Such a reduction in transmit power may cause degradation in communication performance of the electronic device. Therefore, a need exists for methods of satisfying the TER regulation condition while minimizing degradation in communication performance of an electronic device. US 2020/015171 A1 relates to a method implemented in a wireless device including combining an SAR distribution and an PD distribution to generate a combined RF exposure distribution. The method also includes determining at least one first maximum allowable power level and at least one second maximum allowable power level for a future time slot based on the combined RF exposure distribution, setting at least one transmission power limit for a first transmitter in the future time slot based on the at least one first maximum allowable power level, and setting at least one transmission power limit for a second transmitter in the future time slot based on the at least one second maximum allowable power level.

SUMMARY

Embodiments of the inventive concept provide an electronic device capable of providing optimal communication performance while satisfying a total exposure ratio (TER) condition. The TER condition ensures that the device is not harmful. The embodiments described herein therefore provide improved communication performance without providing harm, and also whilst complying with safety regulations.

According to an aspect of the inventive concept, there is provided an electronic device as claimed in claim 1.

According to another aspect of the inventive concept, there is provided an operation method of an electronic device according to claim 11.

At least some of the above and other features of the invention are set out in the claims.

BRIEF DESCRIPTION OF THE DRAWINGS

Embodiments of the inventive concept will be more clearly understood from the following detailed description taken in conjunction with the accompanying drawings in which:

FIG. 1 is a diagram illustrating a wireless communication system including an electronic device according to an embodiment;

FIGS. 2 and 3 are diagrams for explaining a total exposure ratio (TER) measurement period for an electronic device according to an embodiment;

FIG. 4 is a block diagram illustrating a more detailed structure of a controller of an electronic device, according to an embodiment;

FIG. 5 is a flowchart of a method of an operation method of an electronic device, according to an embodiment;

FIG. 6 is a flowchart illustrating in more detail a method, performed by an electronic device, of calculating a residual TER value, according to an embodiment;

FIG. 7 is a flowchart illustrating in more detail a method, performed by an electronic device, of setting a power control mode, according to an embodiment;

FIG. 8 is a flowchart illustrating in more detail a method, performed by an electronic device, of setting an available TER value when a power control mode is a saving mode, according to an embodiment;

FIG. 9 is a block diagram illustrating a more detailed structure of a controller of an electronic device, according to another embodiment;

FIG. 10 is a flowchart of an operation method of an electronic device, according to another embodiment;

FIGS. 11 and 12 are flowcharts illustrating in more detail a method, performed by an electronic device, of setting a TER allocation percentage, according to another embodiment;
FIG. 13 is a flowchart of an operation when an electronic device is operating in a limited power mode, according to another embodiment; and
FIG. 14 is a block diagram of a wireless communication equipment according to an embodiment.

DETAILED DESCRIPTION OF EMBODIMENTS

Hereinafter, embodiments will be described in detail with reference to the accompanying drawings.

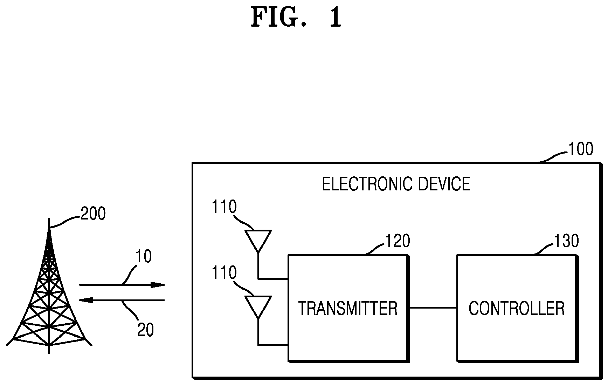

FIG. 1 is a diagram illustrating a wireless communication system including an electronic device according to an embodiment.

Referring to FIG. 1, the wireless communication system may include an electronic device 100 and a base station 200. The electronic device 100 and the base station 200 may communicate through a downlink channel 10 and an uplink channel 20.

The electronic device 100 may be a device capable of performing wireless communication, may be stationary or mobile, and may be any one of various devices capable of transmitting and receiving data and control information by communicating with the base station 200. The electronic device 100 may also be referred to as a terminal equipment, a mobile station (MS), a mobile terminal (MT), a user terminal (UT), a subscriber station (SS), a wireless device, a handheld device, or the like.

The base station 200 may generally refer to a fixed station that communicates with the electronic device 100 and other base stations, and exchange data and control information by communicating with the electronic device 100 and the other base stations. The base station 200 may also be referred to as a Node B, an evolved Node B (eNB), a base transceiver system (BTS), an access point (AP), or the like.

A wireless communication network between the electronic device 100 and the base station 200 may support communication by multiple users by sharing available network resources among the users. For example, in a wireless communication network, information may be transmitted using various methods, such as code division multiple access (CDMA), frequency division multiple access (FDMA), time division multiple access (TDMA), orthogonal frequency division multiple access (OFDMA), single carrier FDMA (SC-FDMA), etc.

The electronic device 100 may include a plurality of antennas 110, a transmitter 120, and a controller 130.

The antenna 110 may transmit an RF signal through the uplink channel 20 and receive an RF signal through the downlink channel 10.

The transmitter 120 may be selectively connected to at least one of the plurality of antennas 110. The transmitter 120 may output transmit power to the antenna 110 to transmit an RF signal via the antenna 110.

The controller 130 may adjust the transmit power of the transmitter 120. In other words, the controller 130 may adjust the transmit power of the transmitter 120 so that a desired RF signal may be finally output via the antenna 110. In an embodiment, the controller 130 may directly adjust the transmit power of the transmitter 120, and in another embodiment, the controller 130 may control the transmit power of the transmitter 120 through a separate power management integrated circuit (PMIC).

The controller 130 may be implemented using a processor, a numeric processing unit (NPU), a graphics processing unit (GPU), or the like.

The controller 130 may set a transmit power limit of the transmitter 120. The controller 130 may control the transmitter 120 to transmit an RF signal at transmit power that is less than or equal to the transmit power limit.

The transmit power of the transmitter 120 may be adjusted based on an uplink transmit power control (TPC) command transmitted from the base station 200 to the electronic device 100 through the downlink channel 10. For example, to keep a signal-to-interference ratio (SIR) of an RF signal received from the electronic device 100 at a target level, the base station 200 may transmit a TPC command to the electronic device 100 based on estimated SIR. The electronic device 100 may then adjust, based on the TPC command received via the controller 130, transmit power of RF signals transmitted to the base station 200 through the uplink channel 20.

The transmit power of the transmitter 120 may be related to energy radiated from the electronic device 100. That is, strong electromagnetic waves may be generated from the electronic device 100 by radio frequency (RF) signals generated with high transmit power and the electromagnetic waves may have a harmful effect on a user. The harmful effect of such electromagnetic waves on the user may be measured through a specific absorption percentage (SAR) or a power density (PD). In addition, the SAR and the PD measured when the electronic device 100 transmits an RF signal may be limited using a total exposure ratio (TER) value regulation condition, and the TER value regulation condition may be defined as shown in Equation 1 below:

[Equation 1]

$$TER = \sum_{n=0}^{N-1} \frac{SAR_{avr,n}}{SAR_{limit}} + \sum_{m=0}^{M-1} \frac{PD_{avr,m}}{PD_{limit}} < 1$$

In Equation 1, $SAR_{limit}$ denotes a SAR limit that may be determined by an authorized agency, $SAR_{avr,n}$ denotes an average of SAR values measured during an n-th measurement period, $PD_{limit}$ denotes a PD limit that may be determined by the authorized agency, and $PD_{avr,m}$ denotes an average of PD values measured during an m-th measurement period.

The SAR and PD may each be calculated by using commonly known mathematical formulas. In this case, SAR and PD may be proportional to transmit power of the electronic device 100. Because the TER is calculated as the sum of the SAR and the PD, the TER may be proportional to the transmit power of the electronic device 100. Therefore, by increasing or decreasing the transmit power of the electronic device 100, a TER measured when the electronic device 100 transmits an RF signal may be increased or decreased.

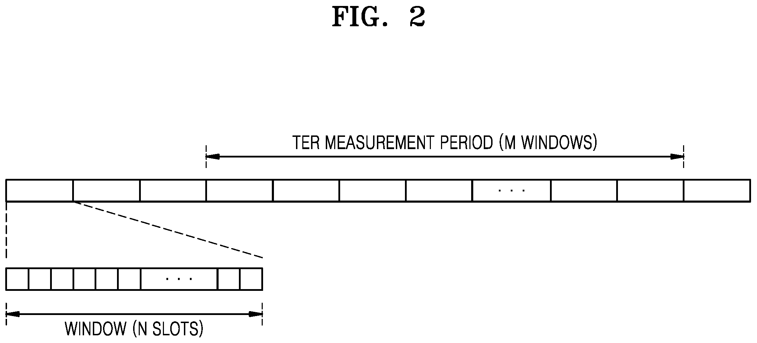

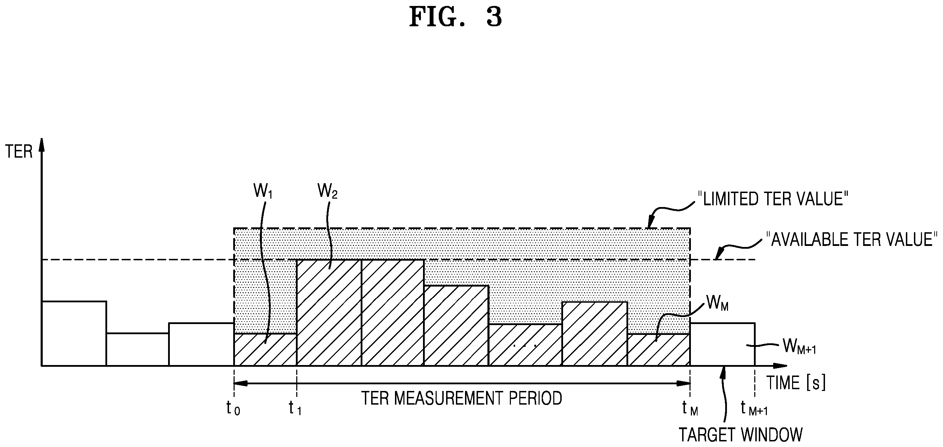

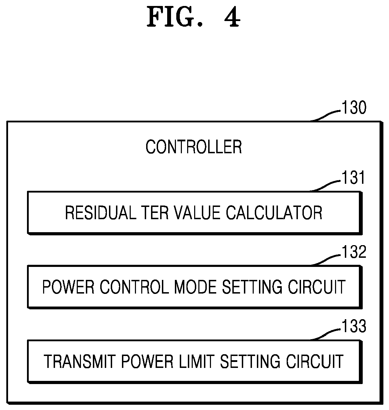

To satisfy the TER regulation condition as defined by Equation 1 above, the controller 130 of the electronic device 100 according to an embodiment may set a transmit power limit of the transmitter 120. To this end, the controller 130 may calculate what is herein defined as a "residual TER value" for a TER measurement period based on transmit power of the transmitter 120, set a power control mode of the electronic device 100, based on a comparison of the residual TER value and a first reference TER value, and set, based on the power control mode, a transmit power limit for a "target window". Briefly, a residual TER value may be a measure of how close a TER measured over a TER measurement period is to a previously set "limited TER" (e.g., a maximum TER). A TER measurement period and a target window are described in more detail below with reference to FIGS. 2 and 3, and an operation of the controller 130 is described below in more detail with reference to FIGS. 4 to 13.

FIGS. 2 and 3 are diagrams for explaining a TER measurement period for an electronic device according to an embodiment.

Referring to FIG. 2, it can be seen that a plurality of blocks are arranged in a horizontal direction, which is a time direction. Each of the blocks at the top of FIG. 2 may represent a window. Each window may have a preset time period. In an example, a window may have a time period of 250 ms.

As seen through a block at the bottom of FIG. 2, one window may be subdivided into N slots. A slot may represent a time unit for transmitting a plurality of communication symbols.

In an embodiment, the controller 130 may calculate a TER based on the transmit power of the transmitter 120 in units of slots, and a "slot TER value" may mean a TER calculated for any given slot.

A TER measurement period may refer to a period in which a TER is measured for the purpose of determining whether a TER regulation condition is satisfied. The TER measurement period may include M windows.

The TER measurement period may be set based on a communication frequency band for the electronic device 100. For example, when the communication frequency band for the electronic device 100 is less than 3 gigahertz (GHz), the TER measurement period may be 100 s and include 400 windows. When the communication frequency band for the electronic device 100 is greater than or equal to 3 GHz but less than 6 GHz, the TER measurement period may be 60 s and include 240 windows. When the communication frequency band for the electronic device 100 is greater than or equal to 6 GHz, the TER measurement period may be 4 s, and may include 16 windows.

FIG. 3 illustrates a histogram graph of TER values measured over time. In the graph of FIG. 3, the horizontal axis represents time, the vertical axis represents a TER value, and each interval may correspond to one window. In this case, a "window TER value", which indicates a TER value calculated for one window, may be calculated by summing together slot TER values for a plurality of slots included in the window.

According to the invention, the electronic device 100 calculates a residual TER value, based on a comparison between window TER values and a "limited TER value" (e.g. a TER limit), during the TER measurement period. The limited TER value may indicate a maximum TER value that is permissible during the TER measurement period. In addition, the electronic device 100 may set, based on the residual TER value, an "available TER value", which is a maximum TER applicable to signal energy of a target window in a period immediately following the TER measurement period.

After setting the available TER value for the target window, the electronic device 100 may include the window in an updated TER measurement period. The electronic device 100 may exclude, from the updated TER measurement period, an oldest one among the plurality of windows included in the previous TER measurement period. The electronic device 100 may then set, as a next target window, a window within a period immediately following the updated TER measurement period, and set an available TER value for the next target window based on a residual TER determined for the updated TER measurement period.

For example, in FIG. 3, a first TER measurement period may be the period from time $t_0$ to time $t_M$ and encompass windows $W_1$ through $W_M$. A limited TER value may have been set in advance for the first TER measurement period. A first residual TER value may be computed as a difference between the limited TER value and a summation of measured TERs

for the windows $W_1$ to $W_M$. The first residual TER value may be used to generate a first available TER value for the target window, $W_{M+1}$, which may occur between times $t_M$ and $t_{M+1}$. Thereafter, a second TER measurement period may be the period between times $t_1$ and $t_{M+1}$, which includes the window $W_{M+1}$ in place of the window $W_1$. A second residual TER value may then be computed for the second TER measurement period to arrive at a second available TER value corresponding to a target window succeeding the window $W_M$. In the second TER measurement period, the same limited TER value may be used to determine the second residual TER value.

FIG. 4 is a block diagram illustrating a more detailed structure of a controller of an electronic device, according to an embodiment.

Referring to FIG. 4, the controller 130 may include a residual TER value calculator 131, a power control mode setting circuit 132, and a transmit power limit setting circuit 133.

The residual TER value calculator 131 may calculate a residual TER value for a TER measurement period based on transmit power of the transmitter 120. The residual TER value may be a value indicating how much less a TER value used is than a limited TER value during the TER measurement period.

In detail, the residual TER value calculator 131 may calculate a slot TER value based on the transmit power of the transmitter 120. The residual TER value calculator 131 may identify the transmit power of the transmitter 120 in a slot for which a slot TER value is to be calculated, and calculate the slot TER value based on the transmit power.

The residual TER value calculator 131 may calculate a window TER value based on a plurality of slot TER values. The residual TER value calculator 131 may calculate a window TER value by summing together the slot TER values for a plurality of slots included in a window for which the window TER value is to be calculated.

The residual TER value calculator 131 may calculate a residual TER value, based on a plurality of window TER values, and a limited TER value.

The residual TER value calculator 131 may calculate an accumulated TER value based on a plurality of window TER values. The accumulated TER value may be a value obtained by accumulating TER values used during a TER measurement period. The residual TER value calculator 131 may calculate the accumulated TER value by adding up window TER values respectively corresponding to a plurality of windows included in the TER measurement period. In addition, the residual TER value calculator 131 may calculate the residual TER value by subtracting the accumulated TER value from the limited TER value.

The power control mode setting circuit 132 may set a power control mode of the electronic device 100, based on the residual TER value and a first reference TER value. The first reference TER value may refer to a value used as a reference in determining whether the TER value regulation condition is satisfied even when a high TER value is used in a target window. For example, the first reference TER value may be set to 10% of the limited TER value.

In detail, when the residual TER value is greater than or equal to the first reference TER value, the power control mode setting circuit 132 may set a power control mode based on a change in window TER values within the TER measurement period.

The change in window TER values within the TER measurement period may indicate whether the window TER values are increasing or decreasing during the TER measurement period. The change in window TER values within the TER measurement period may be determined based on an overall increase/decrease in window TER values, a window TER value for an oldest window among a plurality of windows within the TER measurement period, etc.

The change in window TER values within the TER measurement period may be calculated based on the window TER values, a correlation coefficient between antennas 110 included in the electronic device 100, and a back-off TER value.

The correlation coefficient between the antennas 110 may be a coefficient for compensating for a difference that occurs when a first antenna used at a first interval in the TER measurement period differs from a second antenna used at a second interval occurring after the first interval. In other words, the correlation coefficient between the antennas may be a coefficient for compensating for a difference in TER values that occurs because the first antenna and the second antenna transmit signals in different directions. Therefore, when a window TER value is calculated based on the second antenna, a window TER value calculated when the first antenna is used may be reduced or increased by multiplying a TER value calculated based on the first antenna by the correlation coefficient between the antennas.

The back-off TER value may refer to a minimum TER value considered to be used in a window. Therefore, when a window TER value for a particular window among the windows within the TER measurement period is less than a back-off TER value, the back-off TER value may be used instead of the window TER value for the corresponding window when determining a change in window TER values within the TER measurement period.

The power control mode setting circuit 132 may set a pre-power saving mode ("pre-saving mode") as the power control mode when a window TER value is increasing within the TER measurement period. The pre-saving mode may be a mode for limiting the use of transmit power in advance in a case where the TER value regulation condition is satisfied even when a lot of power is used during a target window but it is highly likely that the TER value regulation condition is not satisfied over time. Accordingly, even when the residual TER value is greater than or equal to the first reference TER value, the power control mode setting circuit 132 may set the pre-saving mode as the power control mode when a window TER value is increasing within the TER measurement period.

The power control mode setting circuit 132 may set a maximum power mode as the power control mode when a window TER value is decreasing within the TER measurement period. The maximum power mode may be a mode that allows transmit power to be used as much as necessary in a case where the TER value regulation condition is satisfied even when a lot of power is used during a target window and the TER value regulation condition is also likely to be satisfied over time. Accordingly, the power control mode setting circuit 132 may set the maximum power mode as the power control mode when the residual TER value is greater than or equal to the first reference TER value and a window TER value is decreasing within the TER measurement period.

When the residual TER value is less than the first reference TER value, the power control mode setting circuit 132 may set a power saving mode ("saving mode") as the power control mode. The power control mode may be a mode for limiting the use of transmit power when excessive power is used in a target window and thus it is highly likely that the TER value regulation condition is not satisfied.

The transmit power limit setting circuit 133 may set a transmit power limit for a target window based on a power control mode set by the power control mode setting circuit 132.

In detail, the transmit power limit setting circuit 133 may set an available TER value for a target window based on a power control mode.

When the power control mode is a saving mode, the transmit power limit setting circuit 133 may determine what percentage of the limited TER value corresponds to the residual TER value and set the available TER value to a value between a minimum TER value and a back-off TER value. The minimum TER value may be a TER value corresponding to a minimum transmit power required for transmission of a signal via the antenna 110.

The transmit power limit setting circuit 133 may set an available TER value, based on the second reference TER value and the third reference TER value. The second reference TER value and the third reference TER value may be values used as a reference in determining how much transmit power the electronic device 100 is to be saved in the saving mode and in setting the available TER value. In this case, the second reference TER value and the third reference TER value may both be less than the first reference TER value. For example, the first reference TER value may correspond to 10% of the limited TER value, the second reference TER value may correspond to 9% of the limited TER value, and the third reference TER value may correspond to 3% of the limited TER value.

When the power control mode is the saving mode and the residual TER value is greater than or equal to the second reference TER value, the transmit power limit setting circuit 133 may set a back-off TER value as an available TER value. When the power control mode is the saving mode and the residual TER value is less than the second reference TER value but greater than or equal to the third reference TER value, the transmit power limit setting circuit 133 may set, as an available TER value, a value obtained by multiplying a back-off TER value by a ratio of the residual TER to the first reference TER value. When the residual TER value is less than the third reference TER value, the transmit power limit setting circuit 133 may set a minimum TER value as the available TER value.

When the power control mode is a pre-saving mode, the transmit power limit setting circuit 133 may set a back-off TER value as an available TER value. That is, even when the residual TER value is greater than or equal to the first reference TER value, in the pre-saving mode, the transmit power limit setting circuit 133 may set a back-off TER value as an available TER value instead of a required TER value, thereby preventing occurrence of a situation in which the TER value regulation condition is not satisfied.

When the power control mode is a maximum power mode, the transmit power limit setting circuit 133 may set a required TER value as an available TER value. The required TER value may be a TER value corresponding to a maximum value of transmit power required when the electronic device 100 transmits a signal via the antenna 110. When the electronic device 100 transmits a signal using the transmit power corresponding to the required TER value, optimal communication performance may be achieved.

The transmit power limit setting circuit 133 may set a transmit power limit based on an available TER value. The transmit power limit setting circuit 133 may set a transmit power limit by using Equation 1 and commonly known mathematical formulas for calculating SAR values and PD values.

When the electronic device 100 according to an embodiment as described above is used, optimal communication performance may be provided while satisfying the TER value regulation condition by calculating a residual TER value for a TER measurement period, setting a power control mode based on a first reference TER value and a change in window TER values, and setting a transmit power limit based on the power control mode.

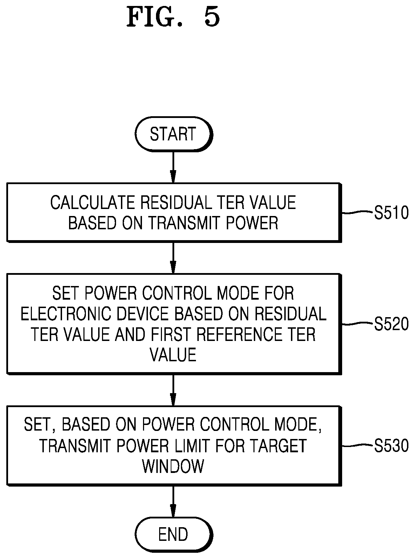

FIG. 5 is a flowchart of a method of an operation method of an electronic device, according to an embodiment.

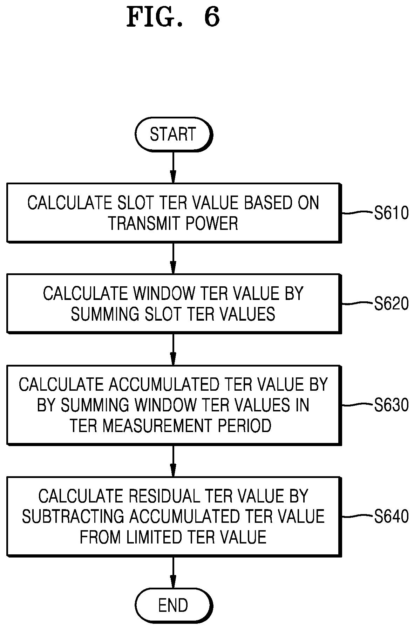

Referring to FIG. 5, in operation S510, the controller 130 may calculate a residual TER value based on transmit power. A method, performed by the controller 130, of calculating a residual TER value may be as shown in more detail in FIG. 6.

FIG. 6 is a flowchart illustrating in more detail a method, performed by an electronic device, of calculating a residual TER value, according to an embodiment.

Referring to FIG. 6, in operation S610, the controller 130 may calculate a slot TER value based on transmit power of the transmitter 120. The controller 130 may calculate a slot TER value by using Equation 1 above and commonly known mathematical formulas for calculating SAR values and PD values.

In operation S620, the controller 130 may calculate a window TER value by summing together a plurality of slot TER values. The controller 130 may calculate a window TER value by summing together a plurality of slot TER values included in the same window.

In operation S630, the controller 130 may calculate an accumulated TER value by summing together a plurality of window TER values within a TER measurement period. For example, when one window has a length of 250 ms and the TER measurement period has a length of 100 s, the controller 130 may calculate an accumulated TER value by summing together 400 window TER values respectively corresponding to 400 windows included in the TER measurement period.

In operation S640, the controller 130 may calculate a residual TER value by subtracting the accumulated TER value from a limited TER value.

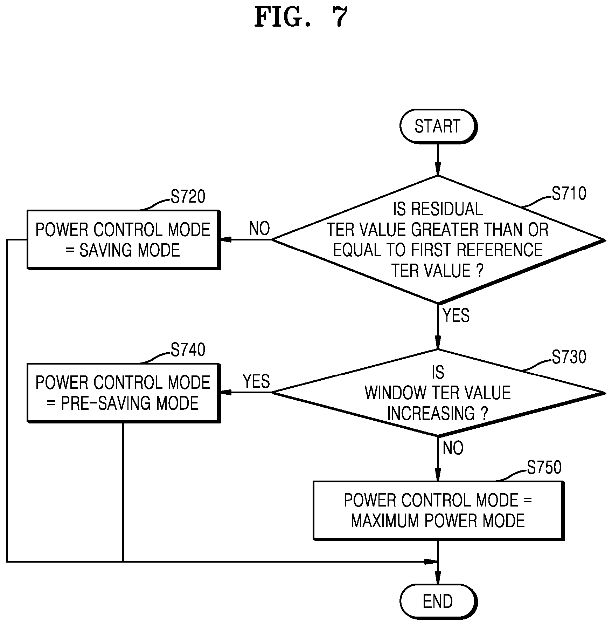

Returning to FIG. 5, in operation S520, the controller 130 may set a power control mode of the electronic device 100, based on the residual TER value and a first reference TER value. A method, performed by the controller 130, of setting a power control mode is described in more detail with reference to FIG. 7.

FIG. 7 is a flowchart illustrating in more detail a method, performed by an electronic device, of setting a power control mode, according to an embodiment.

Referring to FIG. 7, in operation S710, the controller 130 may determine whether the residual TER value is greater than or equal to the first reference TER value.

When it is determined that the residual TER value is less than the first reference TER value, the controller may perform operation S720 to set a saving mode as a power control mode.

When it is determined that the residual TER value is greater than or equal to the first reference TER value, the controller 130 may perform operation S730 to determine whether a window TER value is increasing.

When it is determined that the window TER value is increasing, the controller 130 may perform operation S740 to set a pre-saving mode as the power control mode.

When it is determined that the window TER value is decreasing, the controller 130 may perform operation S750 to set a maximum power mode as the power control mode.

Referring back to FIG. 5, in operation S530, the controller 130 may set, based on the power control mode, a transmit power limit for a target window.

First, the controller 130 may set, based on the power control mode, an available TER value for the target window.

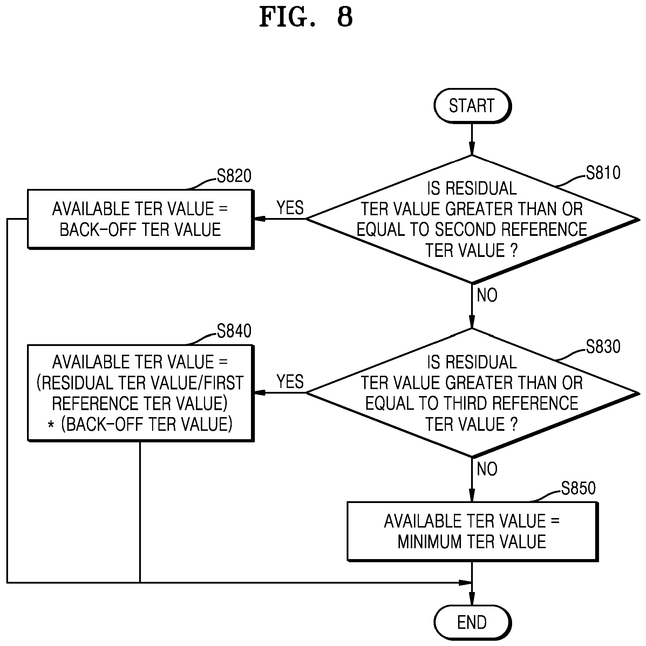

When the power control mode is the saving mode, the controller 130 may set an available TER value, based on a second reference TER value and a third reference TER value. A method, performed by the controller 130, of setting an available TER value when the power control mode is the saving mode may be as shown in more detail in FIG. 8.

FIG. 8 is a flowchart illustrating in more detail a method, performed by an electronic device, of setting an available TER value when a power control mode is a saving mode, according to an embodiment.

Referring to FIG. 8, in operation S810, the controller 130 may determine whether the residual TER value is greater than or equal to the second reference TER value.

When it is determined that the residual TER value is greater than or equal to the second reference TER value, the controller 130 may perform operation S820 to set a back-off TER value as an available TER value.

When it is determined that the residual TER value is less than the second reference TER value, the controller 130 may perform operation S830 to determine whether the residual TER value is greater than or equal to the third reference TER value.

When it is determined that the residual TER value is greater than or equal to the third reference TER value, the controller 130 may perform operation S840 to set, as an available TER value, a value obtained by multiplying the back-off TER value by a ratio of the residual TER value to the first reference TER value.

When it is determined that the residual TER value is less than the third reference TER value, the controller 130 may perform operation S850 to set a minimum TER value as an available TER value.

Returning to FIG. 7, when the power control mode is a pre-saving mode (operation S740), the controller 130 may set the back-off TER value as an available TER value. Furthermore, when the power control mode is a maximum power mode, the controller 130 may set the available TER value to a specification-compliant (e.g., regulation) TER value.

Then, the controller 130 may set, based on the available TER value for a target window, a transmit power limit for the target window.

When the operation method of the electronic device 100 according to an embodiment as described above is used, optimal communication performance may be provided while satisfying the TER value regulation condition by setting a transmit power limit based on a residual TER value and a change in window TER values within a TER measurement period.

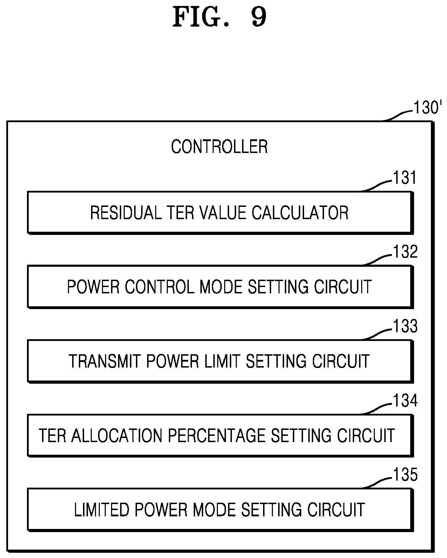

FIG. 9 is a block diagram illustrating a more detailed structure of a controller, 130', of an electronic device, according to another embodiment. The controller 130' is an example of the controller 130 of FIG. 1.

Referring to FIG. 9, according to another embodiment, the controller 130' of the electronic device 100 may include a residual TER value calculator 131, a power control mode setting circuit 132, a transmit power limit setting circuit 133, a TER allocation percentage setting circuit 134, and a limited power mode setting circuit 135.

The limited power mode setting circuit 135 may operate before the TER allocation percentage setting circuit 134, the residual TER value calculator 131, the power control mode setting circuit 132, and the transmit power limit setting circuit 133 operate. The limited power mode setting circuit 135 may determine whether the electronic device 100 is operating in a limited power mode. The limited power mode setting circuit 135 may determine that the electronic device 100 is operating in the limited power mode when the electronic device 100 needs to maintain consistent communication quality as in a call mode.

When the electronic device 100 is operating in the limited power mode, the limited power mode setting circuit 135 may set preset reference transmit power as a transmit power limit. For example, the reference transmit power may be transmit power corresponding to a back-off TER value.

The TER allocation percentage setting circuit 134 may set TER allocation percentages for a plurality of communication networks based on whether the electronic device 100 is using one communication network.

A communication network may be a network for communication between the electronic device 100 and the base station 200, between the electronic devices 100, or between the base stations 200 by using a fifth generation (5G) (or new radio (NR)), long term evolution (LTE), LTE-advanced (LTE-A), WiMAX, WiFi, CDMA, global system for mobile communications (GSM), wireless local area network (WLAN), or any other suitable wireless communication technology.

A TER allocation percentage may be a percentage indicating a TER value that is usable by each of a plurality of communication networks from among all available TER values. For example, when the electronic device 100 sets a TER allocation percentage for a first communication network to 60% and a TER allocation percentage for a second communication network to 40%, the first communication network may use transmit power corresponding to a maximum of 60% of the limited TER value, and the second communication network may use transmit power corresponding to a maximum of 40% of the limited TER value.

When the electronic device 100 is using only one communication network, the TER allocation percentage setting circuit 134 may determine whether the electronic device 100 is operating in a dual Subscriber Identity Module (SIM) mode. The dual SIM mode may be a mode in which the electronic device 100 accesses and uses each of a plurality of communication networks via a separate SIM.

When the electronic device 100 is operating in the dual SIM mode, the TER allocation percentage setting circuit 134 may set a preset dual SIM TER allocation percentage as a TER allocation percentage. In this case, even when the electronic device 100 is using one communication network, the dual SIM TER allocation percentage may be set such that a TER allocation percentage of the communication network being used is not set to 100% but instead a part of the limited TER value is allocated to a communication network not being used, e.g., by setting the TER allocation percentage of the communication network being used to 75% and the TER allocation percentage of the communication network not being used to 25%. This is because the speed of information exchange between different SIMs in the dual SIM mode is low.

When it is determined that the electronic device is not operating in the dual SIM mode, the TER allocation percentage setting circuit 134 may set a TER allocation percentage by taking into account the effect of a communication network not being used.

For example, in a case where a communication network that is not being used has never been used during the TER measurement period, the TER allocation percentage setting circuit 134 may set a TER allocation percentage of the communication network being used to 100% while setting a TER allocation percentage of the communication network not being used to 0%. On the other hand, when the communication network that is not being used has been used during the TER measurement period, the TER allocation percentage setting circuit 134 may set the TER allocation percentage of the communication network not being used to a value other than 0%, based on a TER allocation percentage in a window immediately preceding a target window. For example, when the TER allocation percentage of a communication network used in the window immediately preceding the target window is 85%, the TER allocation percentage setting circuit 134 may set the TER allocation percentage of the communication network being used in the target window to a value, e.g., 90%, slightly higher than the TER allocation percentage in the immediately preceding window.

When the electronic device 100 is using a plurality of the communication networks, the TER allocation percentage setting circuit 134 may set TER allocation guide percentages for the plurality of communication networks based on TER usage percentages for the plurality of communication networks in a window preceding the target window. A TER allocation guide percentage may be a percentage used as a reference in setting a TER allocation percentage. When a TER usage percentage for the first network is 35% and a TER usage percentage of the second network is 55% in the window preceding the target window, the TER allocation percentage setting circuit 134 may set a TER allocation guide percentage for the first network to 40% and a TER allocation guide percentage for the second network to 60%.

When the electronic device 100 is using a plurality of communication networks, the TER allocation percentage setting circuit 134 may set a TER allocation percentage for each of the communication networks, based on a corresponding TER allocation guide percentage and whether the TER allocation percentage keeps converging.

Whether the TER allocation percentage keeps converging may be determined based on whether the TER allocation percentage has converged in a plurality of windows within the TER measurement period.

When the TER allocation percentage does not keep converging while the electronic device 100 is using the plurality of communication networks, the TER allocation percentage setting circuit 134 may set the TER allocation percentage by adjusting a TER allocation guide percentage. In other words, the TER allocation percentage setting circuit 134 may set the TER allocation percentage to converge over time.

When the TER allocation percentage keeps converging while the electronic device 100 is using the plurality of communication networks, the TER allocation percentage setting circuit 134 may set a TER allocation guide percentage as the TER allocation percentage.

The TER allocation percentage setting circuit 134 may set an instantaneous maximum TER value and a controlled TER value for each of the communication networks.

The instantaneous maximum TER value may be a TER value corresponding to a maximum transmit power required for transmission of a signal via the antenna 110, and may be adjusted and set for each of the communication networks according to a corresponding TER allocation percentage.

The controlled TER value is a value indicating whether additional adjustment is required with respect to an available TER value, and may be set to a certain percentage (e.g., 50%) of the instantaneous maximum TER value.

The residual TER value calculator 131 may calculate, for each of the communication networks, a residual TER value for a TER measurement period based on transmit power of the transmitter 120 and a TER allocation percentage. In other words, the residual TER value calculator 131 may separately calculate a residual TER value corresponding to a TER measurement period for each of the communication networks.

In detail, for each of the communication networks, the residual TER value calculator 131 may calculate a slot TER value based on the transmit power of the transmitter 120 and calculate a window TER value by summing together slot TER values for a plurality of slots included in a window.

The residual TER value calculator 131 may calculate, for each of the communication networks, a residual TER value, based on a TER allocation percentage, window TER values, and a limited TER value. For each of the communication networks, the residual TER value calculator 131 may calculate an accumulated TER value by summing together window TER values for a plurality of windows included in the TER measurement period and then calculate a residual TER value by subtracting the accumulated TER value from a value obtained by multiplying a TER allocation percentage of the corresponding communication network by the limited TER value. Thus, unlike the embodiment described with reference to FIGS. 4 to 8, the residual TER value calculator 131 may separately calculate a residual TER value for each of the communication networks by using a value obtained by multiplying a corresponding TER allocation percentage by the limited TER value instead of just using the limited TER value.

The power control mode setting circuit 132 may set, for each of the communication networks, a power control mode of the electronic device 100, based on the residual TER value and the first reference TER value.

The power control mode setting circuit 132 may separately set a power control mode for each of the communication networks. For example, the power control mode setting circuit 132 may set a power control mode for the first communication network to a saving mode and a power control mode for the second communication network to a maximum power mode.

A method, performed by the power control mode setting circuit 132, of setting a power control mode may be substantially the same as that described above with reference to FIGS. 4 to 8.

The transmit power limit setting circuit 133 may set, for each of the communication networks, a transmit power limit for a target window based on a power control mode.

In detail, for each of the communication networks, the transmit power limit setting circuit 133 may set an available TER value for the target window based on the power control mode and set a transmit power limit based on the available TER value. Thus, the transmit power limit setting circuit 133 may separately set a transmit power limit for each of the communication networks.

A method, performed by the transmit power limit setting circuit 133, of setting a transmit power limit may be substantially the same as that described above with reference to FIGS. 4 to 8.

After setting an available TER value for each of the communication networks based on a power control mode therefor, the transmit power limit setting circuit 133 may reset a minimum value among the available TER value, an instantaneous maximum TER value, and a controlled TER value as an available TER value for the corresponding communication network.

When the electronic device 100 according to the embodiment of FIG. 9 as described above is operated, even in the case of simultaneously using a plurality of communication networks, optimal communication performance may be provided while satisfying the TER value regulation condition by setting a transmit power limit based on a TER allocation percentage.

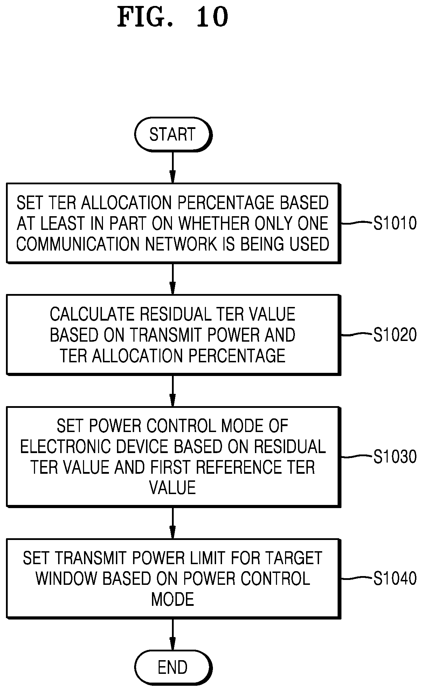

FIG. 10 is a flowchart of an operation method of an electronic device including the above-described controller 130', according to another embodiment.

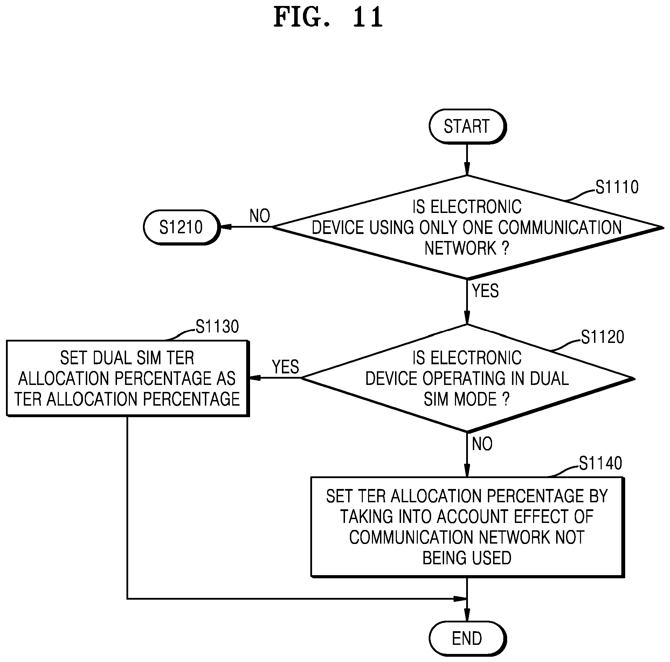

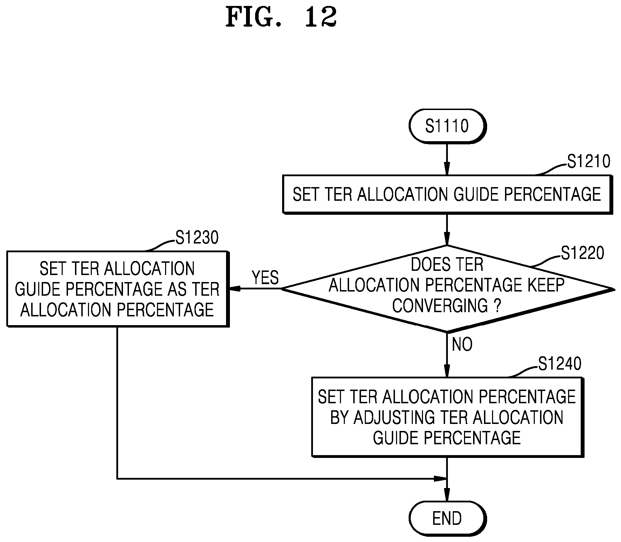

Referring to FIG. 10, in operation S1010, the controller 130' may set a TER allocation percentage based at least in part on whether the electronic device 100 is using only one communication network. A method, performed by the controller 130', of setting a TER allocation percentage may be as shown in more detail in FIGS. 11 and 12.

FIGS. 11 and 12 are flowcharts illustrating in more detail a method, performed by an electronic device, of setting a TER allocation percentage, according to another embodiment.

First, referring to FIG. 11, in operation S1110, the controller 130' may determine whether the electronic device 100 is using only one communication network.

When it is determined that the electronic device 100 is using one communication network, the controller 130' may perform operation S1120 to determine whether the electronic device is operating in a dual SIM mode.

When it is determined that the electronic device 100 is operating in the dual SIM mode, the controller 130 may perform operation S1130 to set a dual SIM TER allocation percentage as a TER allocation percentage.

When it is determined that the electronic device 100 is not operating in the dual SIM mode, the controller 130 may perform operation S1140 to set a TER allocation percentage by taking into account the effect of a communication network being not used.

When it is determined that the electronic device 100 is not using one communication network, the controller 130' may perform operation S1210 of FIG. 12.

Referring to FIG. 12, in operation S1210, the controller 130' may set a TER allocation guide percentage. The controller 130' may set a TER allocation guide percentage for a plurality of communication networks based on TER usage percentages for the plurality of communication networks in a window preceding a target window.

In operation 1220, the controller 130' may determine whether a TER allocation percentage for each of the communication networks keeps converging.

When it is determined that the TER allocation percentage keeps converging, the controller 130' may perform operation S1230 to set a TER allocation guide percentage as the TER allocation percentage.

On the other hand, when it is determined that the TER allocation percentage does not keep converging, the controller 130' may perform operation S1240 to set the TER allocation percentage by adjusting the TER allocation guide percentage.

Returning to FIG. 10, in operation S1020, the controller 130' may calculate a residual TER value, based on transmit power and a TER allocation percentage.

For each of the plurality of communication networks, the controller 130' may calculate a slot TER value based on the transmit power, calculate a window TER value by summing together a plurality of slot TER values, and calculate a residual TER value, based on a TER allocation percentage, a window TER value, and a limited TER value. In this case, the controller 130' may calculate an accumulated TER value by summing together a plurality of window TER values and then calculate a residual TER value by subtracting the accumulated TER value from a value obtained by multiplying a TER allocation percentage of the corresponding communication network by the limited TER value.

In operation S1030, the controller 130' may set a power control mode of the electronic device 100, based on the residual TER value and a first reference TER value. The controller 130' may set a power control mode for each of the communication networks, and a specific method of setting a power control mode may be substantially the same as that described above with reference to operation S520 of FIG. 5.

In operation S1040, the controller 130' may set a transmit power limit for the target window based on the power control mode. The controller 130' may set a transmit power limit for each of the communication networks, and a specific method of setting a transmit power limit may be substantially the same as that described above with reference to operation S530 of FIG. 5.

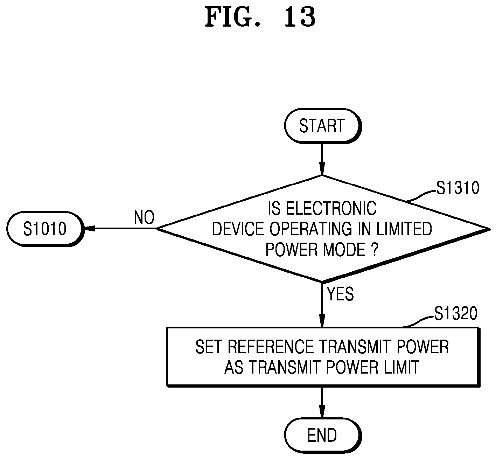

FIG. 13 is a flowchart of an operation when an electronic device is operating in a limited power mode, according to another embodiment.

Referring to FIG. 13, before operation S1010 of FIG. 10, in operation S1310, the controller 130 may determine whether the electronic device 100 is operating in a limited power mode.

When the electronic device 100 is not operating in the limited power mode, the controller 130 may perform operation S1040 of FIG. 10 to set a transmit power limit for the target window by using the same method as described above with reference to FIGS. 10 to 12.

When the electronic device 100 is operating in the limited power mode, the controller 130 may perform operation S1320 to set a reference transmit power for the target window as a transmit power limit for the target window. In other words, when the electronic device 100 is operating in the limited power mode, the transmit power limit for the target window may be set in a different manner than that described above with reference to FIGS. 10 to 12.

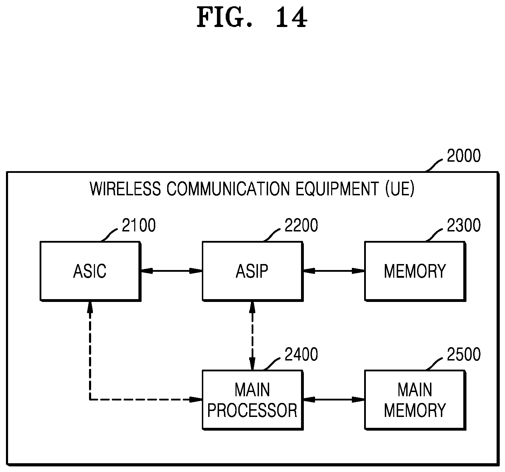

FIG. 14 is a block diagram of a wireless communication equipment according to an embodiment.

Referring to FIG. 14, a wireless communication equipment (or a user equipment (UE)) 2000 may include an application specific integrated circuit (ASIC) 2100, an application specific instruction set processor (ASIP) 2200, a memory 2300, a main processor 2400, and a main memory 2500. Two or more of the ASIC 2100, the ASIP 2200, and the main processor 2400 may communicate with each other. Furthermore, at least two of the ASIC 2100, the ASIP 2200, the memory 2300, the main processor 2400, and the main memory 2500 may be embedded in a single chip.

The ASIC 2100 is an integrated circuit customized for a particular use, and may include, for example, an RFIC, a modulator, a demodulator, etc. The ASIP 2200 may support a dedicated instruction set for a particular application and execute instructions included in the instruction set. The memory 2300 may communicate with the ASIP 2200 and store, as a non-volatile storage device, a plurality of instructions executed by the ASIP 2200. For example, the memory 2300 may include any type of memory accessible by the ASIP 2200, such as random access memory (RAM), read-only memory (ROM), magnetic tape, a magnetic disk, an optical disk, a volatile memory, a non-volatile memory, and any combination thereof.

The main processor 2400 may control the UE 2000 by executing a plurality of instructions. For example, the main processor 2400 may control the ASIC 2100 and the ASIP 2200 and process data received over a wireless communication network or a user input to the UE 2000. The main memory 2500 may communicate with the main processor 2400 and store, as a non-transitory storage device, a plurality of instructions executed by the main processor 2400. For example, the main memory 2500 may include any type of memory accessible by the main processor 2400, such as RAM, ROM, magnetic tape, a magnetic disk, an optical disk, a volatile memory, a non-volatile memory, and any combination thereof.

The components of the electronic device 100 or operations of the operation method of the electronic device 100 according to the embodiments described above may be included in at least one of the components included in the wireless communication equipment 2000 of FIG. 14. For example, the electronic device 100 of FIG. 1 or at least one operation of the operation method of the electronic device 100 may be implemented as a plurality of instructions stored in the memory 2300, and the ASIP 2200 may perform an operation of the electronic device 100 or at least one operation of the operation method by executing the plurality of instructions stored in the memory 2300. In another example, the electronic device 100 of FIG. 1 or at least one operation of the operation method of the electronic device 100 may be implemented as a hardware block and included in the ASIC 2100. In another example, the electronic device 100 of FIG. 1 or at least one operation of the operation method of the electronic device 100 may be implemented as a plurality of instructions stored in the main memory 2500, and the main processor 2400 may perform the electronic device 100 or the at least one operation of the operation method of the electronic device 100 by executing the plurality of instructions stored in the main memory 2500.

Various embodiments described herein describe acts being performed "when" a particular condition is met. It will be understood that these acts may be considered to be performed "in response" to a determination that the condition is met.

Embodiments have been set forth above in the drawings and the specification. Although embodiments have been described using specific terms in the present specification, these are used only for the purpose of explaining particular implementations of the inventive concept, and are not used to limit the meaning or the scope of the inventive concept set forth in the claims. Therefore, those of ordinary skill in the art would understand that various changes in form and details may be made therein and other embodiments are possible therefrom. Accordingly, the true scope of the inventive concept should be defined by the appended claims.

While the inventive concept has been particularly shown and described with reference to embodiments thereof, it will be understood that various changes in form and details may be made therein without departing from the scope of the following claims.

**Claims**

1. An electronic device (100) comprising:

   a plurality of antennas (110);
   a transmitter (120) configured to be selectively connected to at least one antenna of the plurality of antennas (110); and
   a controller (130) configured to:

   set a transmit power limit of the transmitter (120);
   calculate a residual total exposure ratio, hereinafter referred to as TER, value for a TER measurement period based on transmit power of the transmitter output through the at least one antenna, wherein the residual TER value indicates a difference between a TER during the TER measurement period and a TER limit for the TER measurement period, wherein the TER during the TER measurement period is given by a combination of a specific absorption percentage normalized to a respective limit with a power density normalized to a respective limit;
   set a power control mode of the electronic device (100), based on a comparison between the residual TER value and a first reference TER value; and
   set the transmit power limit for a target window based on the power control mode.

2. The electronic device (100) of claim 1, wherein the TER measurement period is set based on a communication frequency band for the electronic device (100).

3. The electronic device (100) of claim 1 or claim 2, wherein each of a plurality of windows within the TER measurement period is composed of a plurality of slots, and the controller (130) is further configured to:

   for each window of the plurality of windows, calculate respective slot TER values for the plurality of slots of the window, based on transmit power of the transmitter (120);
   calculate a plurality of window TER values, each of the window TER values being calculated by summing together the slot TER values for the plurality of slots included in the window; and
   calculate the residual TER value, based on the plurality of window TER values and the TER limit.

4. The electronic device (100) of claim 3, wherein the controller (130) is further configured to:

   calculate an accumulated TER value by summing together the plurality of window TER values respectively corresponding to the plurality of windows included in the TER measurement period; and
   calculate the residual TER value by subtracting the accumulated TER value from the TER limit.

5. The electronic device (100) of any preceding claim, wherein the controller (120) is further configured to:

   determine a change in window TER values within the TER measurement period based on an overall increase or decrease in window TER values;
   set the power control mode based on the change in window TER values within the TER measurement period when the residual TER value is greater than or equal to the first reference TER value; and
   set the power control mode as a power saving mode when the residual TER value is less than the first reference TER value.

6. The electronic device (100) of claim 5, wherein the change in the window TER values within the TER measurement period is calculated based on the window TER values, a correlation coefficient between the plurality of antennas, and a back-off TER value.

7. The electronic device (100) of claim 5 or claim 6, wherein the controller (120) is further configured to:

   set a pre-saving mode as the power control mode when the window TER value is increasing within the TER measurement period; and
   set a maximum power mode as the power control mode when the window TER value is decreasing within the TER measurement period.

8. The electronic device (100) of any preceding claim, wherein the controller (120) is further configured to:

   set an available TER value for the target window based on the power control mode, and
   set the transmit power limit based on the available TER value.

9. The electronic device (100) of claim 8, wherein the controller (120) is further configured to:

   set the available TER value, based on a second reference TER value and a third reference TER value, when the power control mode is a power saving mode;
   set the available TER value to a back-off TER value when the power control mode is a pre-saving mode; and
   set a required TER value as the available TER value when the power control mode is a maximum power mode; and
   wherein the second reference TER value is less than the first reference TER value, and
   the third reference TER value is less than the second reference TER value.

10. The electronic device (100) of claim 9, wherein the controller (120) is further configured to:
    when the power control mode is the power saving mode:

    set the available TER value to the back-off TER value when the residual TER value is greater than or equal to the second reference TER value;

set, as the available TER value, a value obtained by multiplying the back-off TER value by a ratio of the residual TER value to the first reference TER value when the residual TER value is less than the second reference TER value but is greater than or equal to the third reference TER value; and
set the available TER value to a minimum TER value when the residual TER value is less than the third reference TER value.

11. An operation method of an electronic device (100) including a plurality of antennas (110), a transmitter (120) configured to be selectively connected to at least one of the plurality of antennas (110), and a controller (130) configured to set a transmit power limit of the transmitter (120), the operation method comprising:
performing, by the controller (130), operations comprising:

calculating slot total exposure ratio, hereinafter referred to as TER, values based on transmit power of the electronic device (100);
calculating a window TER value by summing together the slot TER values for a plurality of slots included in a window;
calculating a residual TER value for a TER measurement period, based on the window TER value and a TER limit for the TER measurement period, wherein the TER during the TER measurement period is given by a combination of a specific absorption percentage normalized to a respective limit with a power density normalized to a respective limit,
wherein the residual TER value indicates a difference between the window TER value and the TER limit;
setting a power control mode of the electronic device (100), based on a comparison between the residual TER value and a first reference TER value;
setting an available TER value for a target window based on the power control mode; and
setting the transmit power limit for the target window based on the available TER value for the target window.

12. The operation method of claim 11, wherein the calculating of the residual TER value comprises:

calculating an accumulated TER value by summing together window TER values respectively corresponding to a plurality of windows included in the TER measurement period; and
calculating the residual TER value by subtracting the accumulated TER value from the TER limit.

13. The operation method of claim 11 or claim 12, wherein the setting of the power control mode of the electronic device comprises:

determining a change in window TER values within the TER measurement period based on an overall increase or decrease in window TER values;
when the residual TER value is greater than or equal to the first reference TER value, setting the power control mode based on a change in the window TER value within the TER measurement period; and
when the residual TER value is less than the first reference TER value, setting the power control mode to a power saving mode.

14. The operation method of claim 13, wherein the setting of the power control mode based on the change in the window TER value within the TER measurement period comprises: setting the power control mode to a pre-saving mode when the window TER value is increasing within the TER measurement period; and
setting the power control mode to a maximum power mode when the window TER value is decreasing within the TER measurement period.

15. The operation method of any of claims 11-14, wherein the setting an available TER value for a target window based on the power control mode comprises:

setting the available TER value, based on a second reference TER value and a third reference TER value, when the power control mode is a power saving mode;
setting the available TER value to a back-off TER value when the power control mode is a pre-saving mode; and
setting a required TER value as the available TER value when the power control mode is a maximum power mode; and
wherein the second reference TER value is less than the first reference TER value, and
the third reference TER value is less than the second reference TER value.

**Patentansprüche**

1. Elektronische Vorrichtung (100), umfassend:

   eine Vielzahl von Antennen (110);
   einen Sender (120), der so konfiguriert ist, dass er selektiv mit mindestens einer Antenne der Vielzahl von Antennen (110) verbunden wird; und
   eine Steuereinheit (130), die konfiguriert ist, zum:

   Einstellen einer Sendeleistungsgrenze für den Sender (120);
   Berechnen eines Werts eines Rest-Gesamtbelichtungsverhältnisses, im Folgenden als TER bezeichnet, für einen TER-Messzeitraum auf der Grundlage der Sendeleistung des Senderausgangs über die mindestens eine Antenne, wobei der Rest-TER-Wert eine Differenz zwischen einem TER während des TER-Messzeitraums und einem TER-Grenzwert für den TER-Messzeitraum angibt, wobei das TER während des TER-Messzeitraums durch eine Kombination aus einem spezifischen Absorptionsprozentsatz, normiert auf einen jeweiligen Grenzwert, und einer Leistungsdichte, normiert auf einen jeweiligen Grenzwert, gegeben ist;
   Einstellen eines Leistungssteuerungsmodus der elektronischen Vorrichtung (100), basierend auf einem Vergleich zwischen dem Rest-TER-Wert und einem ersten Referenz-TER-Wert; und
   Einstellen der Sendeleistungsgrenze für ein Zielfenster basierend auf dem Leistungssteuerungsmodus.

2. Elektronische Vorrichtung (100) nach Anspruch 1, wobei der TER-Messzeitraum basierend auf einem Kommunikationsfrequenzband für die elektronische Vorrichtung (100) eingestellt wird.

3. Elektronische Vorrichtung (100) nach Anspruch 1 oder Anspruch 2, wobei jedes einer Vielzahl von Fenstern innerhalb des TER-Messzeitraums aus einer Vielzahl von Schlitzen besteht und die Steuereinheit (130) ferner konfiguriert ist, zum:

   Berechnen, für jedes Fenster der Vielzahl von Fenstern, jeweiliger Schlitz-TER-Werte für die Vielzahl von Schlitzen des Fensters basierend auf der Sendeleistung des Senders (120);
   Berechnen einer Vielzahl von Fenster-TER-Werten, wobei jeder Fenster-TER-Wert durch Summierung der Schlitz-TER-Werte für die Vielzahl von im Fenster eingeschlossenen Schlitzen berechnet wird; **und**
   Berechnen des Rest-TER-Werts basierend auf der Vielzahl von Fenster-TER-Werten **und** des TER-Grenzwerts.

4. Elektronische Vorrichtung (100) nach Anspruch 3, wobei die Steuereinheit (130) ferner konfiguriert ist, zum:

   Berechnen eines akkumulierten TER-Werts, indem die Vielzahl von Fenster-TER-Werten, die jeweils den im TER-Messzeitraum eingeschlossenen Fenstern entsprechen, summiert werden; **und**
   Berechnen des Rest-TER-Werts, indem der akkumulierte TER-Wert vom TER-Grenzwert subtrahiert wird.

5. Elektronische Vorrichtung (100) nach einem vorstehenden Anspruch, wobei die Steuereinheit (120) ferner konfiguriert ist, zum:

   Bestimmen einer Änderung der Fenster-TER-Werte innerhalb des TER-Messzeitraums basierend auf einer allgemeinen Zunahme oder Abnahme der Fenster-TER-Werte;
   Einstellen des Leistungssteuerungsmodus basierend auf der Änderung der Fenster-TER-Werte innerhalb des TER-Messzeitraums, wenn der Rest-TER-Wert größer oder gleich dem ersten Referenz-TER-Wert ist; **und**
   Einstellen des Leistungssteuerungsmodus als Leistungssparmodus, wenn der Rest-TER-Wert kleiner als der erste Referenz-TER-Wert ist.

6. Elektronische Vorrichtung (100) nach Anspruch 5, wobei die Änderung der Fenster-TER-Werte innerhalb des TER-Messzeitraums basierend auf der Fenster-TER-Werte, einem Korrelationskoeffizienten zwischen der Vielzahl von Antennen **und** einem Backoff-TER-Wert berechnet wird.

7. Elektronische Vorrichtung (100) nach Anspruch 5 oder 6, wobei die Steuereinheit (120) ferner konfiguriert ist zum:

   Einstellen eines Vorsparmodus als Leistungssparmodus, wenn der Fenster-TER-Wert innerhalb des TER-Messzeitraums ansteigt; und
   Einstellen eines Maximalleistungsmodus als Leistungssteuerungsmodus, wenn der Fenster-TER-Wert innerhalb des TER-Messzeitraums abnimmt.

**8.** Elektronische Vorrichtung (100) nach einem vorstehenden Anspruch, wobei die Steuereinheit (120) ferner konfiguriert ist, zum:

Einstellen, basierend auf dem Leistungssteuerungsmodus, eines verfügbaren TER-Werts für das Zielfenster, und
Einstellen der Sendeleistungsgrenze basierend auf dem verfügbaren TER-Wert.

**9.** Elektronische Vorrichtung (100) nach Anspruch 8, wobei die Steuereinheit (120) ferner konfiguriert ist, zum:

Einstellen des verfügbaren TER-Werts basierend auf einem zweiten Referenz-TER-Wert und einem dritten Referenz-TER-Wert, wenn der Leistungssteuerungsmodus ein Leistungssparmodus ist;
Einstellen des verfügbaren TER-Werts auf einen Backoff-TER-Wert, wenn der Leistungssteuerungsmodus ein Vorsparmodus ist; und
Einstellen eines erforderlichen TER-Werts als verfügbaren TER-Wert, wenn der Leistungssteuerungsmodus ein Maximalleistungsmodus ist; und
wobei der zweite Referenz-TER-Wert kleiner ist als der erste Referenz-TER-Wert, und
der dritte Referenz-TER-Wert kleiner ist als der zweite Referenz-TER-Wert.

**10.** Elektronische Vorrichtung (100) nach Anspruch 9, wobei die Steuereinheit (120) ferner konfiguriert ist, zum:
wenn der Leistungssteuerungsmodus der Leistungssparmodus ist:

Einstellen des verfügbaren TER-Werts auf den Backoff-TER-Wert, wenn der Rest-TER-Wert größer oder gleich dem zweiten Referenz-TER-Wert ist;
Einstellen, als verfügbaren TER-Wert, eines Werts, der sich durch Multiplikation des Backoff-TER-Werts mit einem Verhältnis des Rest-TER-Werts zum ersten Referenz-TER-Wert ergibt, wenn der Rest-TER-Wert kleiner als der zweite Referenz-TER-Wert, aber größer oder gleich dem dritten Referenz-TER-Wert ist; und
Einstellen des verfügbaren TER-Werts auf einen minimalen TER-Wert, wenn der Rest-TER-Wert kleiner als der dritte Referenz-TER-Wert ist.

**11.** Betriebsverfahren einer elektronischen Vorrichtung (100), die eine Vielzahl von Antennen (110), einen Sender (120), der konfiguriert ist, um wahlweise mit mindestens einer der Vielzahl von Antennen (110) verbunden zu werden, und eine Steuereinheit (130) einschließt, die konfiguriert ist, um eine Sendeleistungsgrenze des Senders (120) einzustellen, wobei das Betriebsverfahren Folgendes umfasst:
Ausführen, durch die Steuereinheit (130) von Operationen, umfassend:

Berechnen von Werten des Schlitz-Gesamtbelichtungsverhältnisses, im Folgenden als TER bezeichnet, basierend auf der Sendeleistung der elektronischen Vorrichtung (100);
Berechnen eines Fenster-TER-Werts durch Summierung der Schlitz-TER-Werte für eine Vielzahl von Schlitzen, die in einem Fenster eingeschlossen sind;
Berechnen eines Rest-TER-Wertes für einen TER-Messzeitraum auf der Grundlage des Fenster-TER-Wertes und eines TER-Grenzwerts für den TER-Messzeitraum, wobei das TER während des TER-Messzeitraums durch eine Kombination aus einem spezifischen Absorptionsprozentsatz, normiert auf einen jeweiligen Grenzwert, und einer Leistungsdichte, normiert auf einen jeweiligen Grenzwert, gegeben ist,
wobei der Rest-TER-Wert eine Differenz zwischen dem Fenster-TER-Wert und dem TER-Grenzwert angibt;
Einstellen eines Leistungssteuerungsmodus der elektronischen Vorrichtung (100) basierend auf einem Vergleich zwischen dem Rest-TER-Wert und einem ersten Referenz-TER-Wert;
Einstellen eines verfügbaren TER-Werts für ein Zielfenster basierend auf dem Leistungssteuerungsmodus; und
Einstellen der Sendeleistungsgrenze für das Zielfenster basierend auf dem verfügbaren TER-Wert für das Zielfenster.

**12.** Betriebsverfahren nach Anspruch 11, wobei die Berechnung des Rest-TER-Wertes Folgendes umfasst:

Berechnen eines akkumulierten TER-Wertes indem Fenster-TER-Werte, die jeweils einer Vielzahl von im TER-Messzeitraum eingeschlossenen Fenstern entsprechen, summiert werden; und
Berechnen des Rest-TER-Werts, indem der akkumulierte TER-Wert vom TER-Grenzwert subtrahiert wird.

**13.** Betriebsverfahren nach Anspruch 11 oder Anspruch 12, wobei das Einstellen des Leistungssteuerungsmodus der elektronischen Vorrichtung Folgendes umfasst:

Bestimmen einer Änderung der Fenster-TER-Werte innerhalb des TER-Messzeitraums basierend auf einer allgemeinen Zunahme oder Abnahme der Fenster-TER-Werte;
wenn der Rest-TER-Wert größer oder gleich dem ersten Referenz-TER-Wert ist, Einstellen des Leistungssteuerungsmodus basierend auf einer Änderung des Fenster-TER-Werts innerhalb des TER-Messzeitraums; und
wenn der Rest-TER-Wert kleiner als der erste Referenz-TER-Wert ist, Einstellen des Leistungssteuerungsmodus in einen Leistungssparmodus.

**14.** Betriebsverfahren nach Anspruch 13, wobei das Einstellen des Leistungssteuerungsmodus basierend auf der Änderung des Fenster-TER-Wertes innerhalb des TER-Messzeitraums Folgendes umfasst:

Einstellen des Leistungssparmodus in einen Vorsparmodus, wenn der Fenster-TER-Wert innerhalb des TER-Messzeitraums ansteigt; und
Einstellen des Leistungssteuerungsmodus in einen Maximalleistungsmodus, wenn der Fenster-TER-Wert innerhalb des TER-Messzeitraums abnimmt.

**15.** Betriebsverfahren nach einem der Ansprüche 11-14, wobei das Einstellen eines verfügbaren TER-Werts für ein Zielfenster basierend auf dem Leistungssteuerungsmodus Folgendes umfasst:

Einstellen des verfügbaren TER-Werts basierend auf einem zweiten Referenz-TER-Wert und einem dritten Referenz-TER-Wert, wenn der Leistungssteuerungsmodus ein Leistungssparmodus ist;
Einstellen des verfügbaren TER-Werts auf einen Backoff-TER-Wert, wenn der Leistungssteuerungsmodus ein Vorsparmodus ist; und
Einstellen eines erforderlichen TER-Werts als verfügbaren TER-Wert, wenn der Leistungssteuerungsmodus ein Maximalleistungsmodus ist; und
wobei der zweite Referenz-TER-Wert kleiner ist als der erste Referenz-TER-Wert, und
der dritte Referenz-TER-Wert kleiner ist als der zweite Referenz-TER-Wert.

**Revendications**

**1.** Dispositif électronique (100) comprenant :

une pluralité d'antennes (110) ;
un émetteur (120) configuré pour être relié sélectivement à au moins une antenne de la pluralité d'antennes (110) ; et
un dispositif de commande (130) configuré pour :

définir une limite de puissance d'émission de l'émetteur (120) ;
calculer une valeur de rapport d'exposition totale, ci-après dénommé TER, résiduelle pour une période de mesure TER sur la base de la puissance d'émission de la sortie de l'émetteur à travers la au moins une antenne, dans lequel la valeur TER résiduelle indique une différence entre un TER pendant la période de mesure TER et une limite TER pour la période de mesure TER, dans lequel le TER pendant la période de mesure TER est donné par une combinaison d'un pourcentage d'absorption spécifique normalisé à une limite respective avec une densité de puissance normalisée à une limite respective ;
définir un mode de commande de puissance du dispositif électronique (100), sur la base d'une comparaison entre la valeur TER résiduelle et une première valeur TER de référence ; et
définir la limite de puissance d'émission pour une fenêtre cible sur la base du mode de commande de puissance.

**2.** Dispositif électronique (100) selon la revendication 1, dans lequel la période de mesure TER est définie sur la base d'une bande de fréquence de communication pour le dispositif électronique (100).

**3.** Dispositif électronique (100) selon la revendication 1 ou la revendication 2, dans lequel chacune d'une pluralité de fenêtres de la période de mesure TER est composée d'une pluralité de créneaux, et le dispositif de commande (130) est en outre configuré pour :

pour chaque fenêtre de la pluralité de fenêtres, calculer les valeurs TER de créneau respectives pour la pluralité de créneaux de la fenêtre, sur la base de la puissance d'émission de l'émetteur (120) ;

calculer une pluralité de valeurs TER de fenêtre, chacune des valeurs TER de fenêtre étant calculée en additionnant les valeurs TER de créneau pour la pluralité de créneaux inclus dans la fenêtre ; et

calculer la valeur TER résiduelle, sur la base de la pluralité de valeurs TER de fenêtre et de la limite TER.

4.  Dispositif électronique (100) selon la revendication 3, dans lequel le dispositif de commande (130) est en outre configuré pour :

calculer une valeur TER cumulée en additionnant la pluralité de valeurs TER de fenêtre correspondant respectivement à la pluralité de fenêtres incluses dans la période de mesure TER; et

calculer la valeur TER résiduelle en soustrayant la valeur TER cumulée de la limite TER.

5.  Dispositif électronique (100) selon une quelconque revendication précédente, dans lequel le dispositif de commande (120) est en outre configuré pour :

déterminer un changement dans les valeurs TER de fenêtre au cours de la période de mesure TER sur la base d'une augmentation ou d'une diminution globale des valeurs TER de fenêtre ;

définir le mode de commande de puissance sur la base du changement dans les valeurs TER de fenêtre au cours de la période de mesure TER lorsque la valeur TER résiduelle est supérieure ou égale à la première valeur TER de référence ; et

définir le mode de commande de puissance sur un mode d'économie d'énergie lorsque la valeur TER résiduelle est inférieure à la première valeur TER de référence.

6.  Dispositif électronique (100) selon la revendication 5, dans lequel le changement dans les valeurs TER de fenêtre au cours de la période de mesure TER est calculé sur la base des valeurs TER de fenêtre, d'un coefficient de corrélation entre la pluralité d'antennes et d'une valeur TER de recul.

7.  Dispositif électronique (100) selon la revendication 5 ou la revendication 6, dans lequel le dispositif de commande (120) est en outre configuré pour :

définir un mode de pré-économie comme mode de commande de puissance lorsque la valeur TER de fenêtre augmente pendant la période de mesure TER ; et

définir un mode de puissance maximale comme mode de commande de puissance lorsque la valeur TER de fenêtre diminue au cours de la période de mesure TER.

8.  Dispositif électronique (100) selon une quelconque revendication précédente, dans lequel le dispositif de commande (120) est en outre configuré pour :

définir une valeur TER disponible pour la fenêtre cible sur la base du mode de commande de puissance, et

définir la limite de puissance d'émission sur la base de la valeur TER disponible.

9.  Dispositif électronique (100) selon la revendication 8, dans lequel le dispositif de commande (120) est en outre configuré pour :

définir la valeur TER disponible, sur la base d'une deuxième valeur TER de référence et d'une troisième valeur TER de référence, lorsque le mode de commande de puissance est un mode d'économie d'énergie ;

définir la valeur TER disponible sur une valeur TER de recul lorsque le mode de commande de puissance est un mode de pré-économie ; et

définir une valeur TER requise comme valeur TER disponible lorsque le mode de commande de puissance est un mode de puissance maximale ; et

dans lequel la deuxième valeur TER de référence est inférieure à la première valeur TER de référence, et la troisième valeur TER de référence est inférieure à la deuxième valeur TER de référence.

10.  Dispositif électronique (100) selon la revendication 9, dans lequel le dispositif de commande (120) est en outre configuré pour :

lorsque le mode de commande de puissance est le mode d'économie d'énergie :

définir la valeur TER disponible sur la valeur TER de recul lorsque la valeur TER résiduelle est supérieure ou égale à la deuxième valeur TER de référence ;

définir, comme valeur TER disponible, une valeur obtenue en multipliant la valeur TER de recul par un rapport entre la valeur TER résiduelle et la première valeur TER de référence lorsque la valeur TER résiduelle est inférieure à la deuxième valeur TER de référence mais supérieure ou égale à la troisième valeur TER de référence ; et

définir la valeur TER disponible sur une valeur TER minimale lorsque la valeur TER résiduelle est inférieure à la troisième valeur TER de référence.

**11.** Procédé de fonctionnement d'un dispositif électronique (100) incluant une pluralité d'antennes (110), un émetteur (120) configuré pour être relié sélectivement à au moins une de la pluralité d'antennes (110), et un dispositif de commande (130) configuré pour définir une limite de puissance d'émission de l'émetteur (120), le procédé de fonctionnement comprenant :

l'exécution, par le dispositif de commande (130), d'opérations comprenant :

le calcul de valeurs de rapport d'exposition totale, ci-après dénommé TER, de créneau sur la base de la puissance d'émission du dispositif électronique (100) ;

le calcul d'une valeur TER de fenêtre en additionnant les valeurs TER de créneau pour une pluralité de créneaux inclus dans une fenêtre ;

le calcul d'une valeur TER résiduelle pour une période de mesure TER, sur la base de la valeur TER de fenêtre et d'une limite TER pour la période de mesure TER, dans lequel le TER pendant la période de mesure TER est donné par une combinaison d'un pourcentage d'absorption spécifique normalisé à une limite respective avec une densité de puissance normalisée à une limite respective,

dans lequel la valeur TER résiduelle indique une différence entre la valeur TER de fenêtre et la limite TER ;

la définition d'un mode de commande de puissance du dispositif électronique (100), sur la base d'une comparaison entre la valeur TER résiduelle et une première valeur TER de référence ;

la définition d'une valeur TER disponible pour une fenêtre cible sur la base du mode de commande de puissance ; et

la définition de la limite de puissance d'émission pour la fenêtre cible sur la base de la valeur TER disponible pour la fenêtre cible.

**12.** Procédé de fonctionnement selon la revendication 11, dans lequel le calcul de la valeur TER résiduelle comprend :

le calcul d'une valeur TER cumulée en additionnant les valeurs TER de fenêtre correspondant respectivement à une pluralité de fenêtres incluses dans la période de mesure TER ; et

le calcul de la valeur TER résiduelle en soustrayant la valeur TER cumulée de la limite TER.

**13.** Procédé de fonctionnement selon la revendication 11 ou la revendication 12, dans lequel la définition du mode de commande de puissance du dispositif électronique comprend :

la détermination d'un changement dans les valeurs TER de fenêtre au cours de la période de mesure TER sur la base d'une augmentation ou d'une diminution globale des valeurs TER de fenêtre ;

lorsque la valeur TER résiduelle est supérieure ou égale à la première valeur TER de référence, la définition du mode de commande de puissance sur la base d'un changement de la valeur TER de fenêtre au cours de la période de mesure TER ; et

lorsque la valeur TER résiduelle est inférieure à la première valeur TER de référence, la définition du mode de commande de puissance sur un mode d'économie d'énergie.

**14.** Procédé de fonctionnement selon la revendication 13, dans lequel la définition du mode de commande de puissance sur la base du changement dans la valeur TER de fenêtre au cours de la période de mesure TER comprend :

la définition du mode de commande de puissance sur un mode de pré-économie lorsque la valeur TER de fenêtre augmente pendant la période de mesure TER ; et

la définition du mode de commande de puissance sur un mode de puissance maximale lorsque la valeur TER de fenêtre diminue au cours de la période de mesure TER.

**15.** Procédé de fonctionnement selon l'une quelconque des revendications 11-14, dans lequel la définition d'une valeur TER disponible pour une fenêtre cible sur la base du mode de commande de puissance comprend :

la définition de la valeur TER disponible, sur la base d'une deuxième valeur TER de référence et d'une troisième valeur TER de référence, lorsque le mode de commande de puissance est un mode d'économie d'énergie ;

la définition de la valeur TER disponible sur une valeur TER de recul lorsque le mode de commande de puissance est un mode de pré-économie ; et

la définition d'une valeur TER requise comme valeur TER disponible lorsque le mode de commande de puissance est un mode de puissance maximale ; et

dans lequel la deuxième valeur TER de référence est inférieure à la première valeur TER de référence, et

la troisième valeur TER de référence est inférieure à la deuxième valeur TER de référence.

# FIG. 1

## FIG. 2

# FIG. 3

# FIG. 4

```
                                                          ┌─130
┌─────────────────────────────────────────────────────┐
│                     CONTROLLER                        │
│                                              ┌─131     │
│   ┌───────────────────────────────────────┐           │
│   │     RESIDUAL TER VALUE CALCULATOR      │           │
│   └───────────────────────────────────────┘           │
│                                              ┌─132     │
│   ┌───────────────────────────────────────┐           │
│   │   POWER CONTROL MODE SETTING CIRCUIT   │           │
│   └───────────────────────────────────────┘           │
│                                              ┌─133     │
│   ┌───────────────────────────────────────┐           │
│   │   TRANSMIT POWER LIMIT SETTING CIRCUIT │           │
│   └───────────────────────────────────────┘           │
└─────────────────────────────────────────────────────┘
```

# FIG. 5

```
               ( START )
                   │
                   ▼
   ┌─────────────────────────────────┐
   │   CALCULATE RESIDUAL TER VALUE   │──── S510
   │     BASED ON TRANSMIT POWER      │
   └─────────────────────────────────┘
                   │
                   ▼
   ┌─────────────────────────────────┐
   │      SET POWER CONTROL MODE FOR  │
   │  ELECTRONIC DEVICE BASED ON RESIDUAL │── S520
   │    TER VALUE AND FIRST REFERENCE TER │
   │              VALUE               │
   └─────────────────────────────────┘
                   │
                   ▼
   ┌─────────────────────────────────┐
   │  SET, BASED ON POWER CONTROL MODE, │
   │   TRANSMIT POWER LIMIT FOR TARGET  │── S530
   │              WINDOW              │
   └─────────────────────────────────┘
                   │
                   ▼
               ( END )
```

# FIG. 6

START

CALCULATE SLOT TER VALUE BASED ON
TRANSMIT POWER ── S610

CALCULATE WINDOW TER VALUE BY
SUMMING SLOT TER VALUES ── S620

CALCULATE ACCUMULATED TER VALUE BY
BY SUMMING WINDOW TER VALUES IN
TER MEASUREMENT PERIOD ── S630

CALCULATE RESIDUAL TER VALUE BY
SUBTRACTING ACCUMULATED TER VALUE
FROM LIMITED TER VALUE ── S640

END

# FIG. 7

```
                                          START
                                            │
                                            ▼
         S720                                              S710
  ┌──────────────────┐          ╱╲  IS RESIDUAL  ╱╲
  │ POWER CONTROL MODE│◄── NO ──╱  TER VALUE GREATER THAN OR ╲
  │   = SAVING MODE   │         ╲  EQUAL TO FIRST REFERENCE  ╱
  └──────────────────┘          ╲╱    TER VALUE ?    ╲╱
           │                              │
           │                             YES
           │                              ▼
         S740                                              S730
  ┌──────────────────┐          ╱╲       IS        ╱╲
  │ POWER CONTROL MODE│◄── YES ─╱   WINDOW TER VALUE   ╲
  │ = PRE-SAVING MODE │         ╲    INCREASING ?      ╱
  └──────────────────┘          ╲╱                   ╲╱
           │                              │
           │                             NO
           │                              ▼
           │                                           S750
           │                    ┌──────────────────────┐
           │                    │  POWER CONTROL MODE = │
           │                    │   MAXIMUM POWER MODE  │
           │                    └──────────────────────┘
           │                              │
           └──────────────────────────────┤
                                          ▼
                                         END
```

# FIG. 8

START

S810
IS RESIDUAL TER VALUE GREATER THAN OR EQUAL TO SECOND REFERENCE TER VALUE ?

YES →

S820
AVAILABLE TER VALUE = BACK-OFF TER VALUE

NO ↓

S830
IS RESIDUAL TER VALUE GREATER THAN OR EQUAL TO THIRD REFERENCE TER VALUE ?

YES →

S840
AVAILABLE TER VALUE = (RESIDUAL TER VALUE/FIRST REFERENCE TER VALUE) * (BACK-OFF TER VALUE)

NO ↓

S850
AVAILABLE TER VALUE = MINIMUM TER VALUE

END

# FIG. 9

```
                                              130'

 ┌──────────────────────────────────────────────┐
 │                 CONTROLLER                     │
 │                                       131      │
 │  ┌──────────────────────────────────────────┐ │
 │  │      RESIDUAL TER VALUE CALCULATOR        │ │
 │  └──────────────────────────────────────────┘ │
 │                                       132      │
 │  ┌──────────────────────────────────────────┐ │
 │  │     POWER CONTROL MODE SETTING CIRCUIT    │ │
 │  └──────────────────────────────────────────┘ │
 │                                       133      │
 │  ┌──────────────────────────────────────────┐ │
 │  │    TRANSMIT POWER LIMIT SETTING CIRCUIT   │ │
 │  └──────────────────────────────────────────┘ │
 │                                       134      │
 │  ┌──────────────────────────────────────────┐ │
 │  │ TER ALLOCATION PERCENTAGE SETTING CIRCUIT │ │
 │  └──────────────────────────────────────────┘ │
 │                                       135      │
 │  ┌──────────────────────────────────────────┐ │
 │  │     LIMITED POWER MODE SETTING CIRCUIT    │ │
 │  └──────────────────────────────────────────┘ │
 └──────────────────────────────────────────────┘
```

# FIG. 10

START

SET TER ALLOCATION PERCENTAGE BASED
AT LEAST IN PART ON WHETHER ONLY ONE
COMMUNICATION NETWORK IS BEING USED — S1010

CALCULATE RESIDUAL TER VALUE
BASED ON TRANSMIT POWER AND
TER ALLOCATION PERCENTAGE — S1020

SET POWER CONTROL MODE OF
ELECTRONIC DEVICE BASED ON RESIDUAL
TER VALUE AND FIRST REFERENCE TER
VALUE — S1030

SET TRANSMIT POWER LIMIT FOR TARGET
WINDOW BASED ON POWER CONTROL
MODE — S1040

END

# FIG. 11

START

S1110

IS ELECTRONIC
DEVICE USING ONLY ONE COMMUNICATION
NETWORK ?

NO → S1210

YES

S1120

IS ELECTRONIC
DEVICE OPERATING IN DUAL
SIM MODE ?

YES →

S1130

SET DUAL SIM TER
ALLOCATION PERCENTAGE AS
TER ALLOCATION PERCENTAGE

NO

S1140

SET TER ALLOCATION PERCENTAGE BY
TAKING INTO ACCOUNT EFFECT OF
COMMUNICATION NETWORK NOT
BEING USED

END

# FIG. 12

```
                                    ┌─────────┐
                                    │  S1110  │
                                    └─────────┘
                                         │
                                         │         ╭─S1210
                                         ▼
                        ┌────────────────────────────────────┐
                        │  SET TER ALLOCATION GUIDE PERCENTAGE │
                        └────────────────────────────────────┘
                                         │
         ╭─S1230                         ▼              ╭─S1220
┌──────────────────────┐         ╱─────────────────────╲
│   SET TER ALLOCATION  │   YES  ╱      DOES TER          ╲
│ GUIDE PERCENTAGE AS TER│◄──────╲ ALLOCATION PERCENTAGE KEEP╱
│  ALLOCATION PERCENTAGE │         ╲    CONVERGING ?        ╱
└──────────────────────┘           ╲─────────────────────╱
         │                              │
         │                              │ NO
         │                              ▼              ╭─S1240
         │              ┌────────────────────────────────┐
         │              │ SET TER ALLOCATION PERCENTAGE    │
         │              │ BY ADJUSTING TER ALLOCATION      │
         │              │     GUIDE PERCENTAGE             │
         │              └────────────────────────────────┘
         │                              │
         │                              ▼
         │                        ┌─────────┐
         └───────────────────────►│   END   │
                                  └─────────┘
```

# FIG. 13

```
                    ┌─────────┐
                    │  START  │
                    └────┬────┘
                         │
                         ▼
                    ╱◇╲         S1310
      NO      ╱ IS ELECTRONIC ╲
┌──────┐ ◄── DEVICE OPERATING IN LIMITED
│S1010 │      ╲ POWER MODE ? ╱
└──────┘         ╲◇╱
                  │ YES
                  ▼            S1320
        ┌──────────────────────────┐
        │ SET REFERENCE TRANSMIT POWER │
        │    AS TRANSMIT POWER LIMIT    │
        └──────────────┬───────────┘
                       │
                       ▼
                  ┌─────────┐
                  │   END   │
                  └─────────┘
```

# FIG. 14

WIRELESS COMMUNICATION EQUIPMENT (UE) 2000

ASIC 2100 ← → ASIP 2200 ← → MEMORY 2300

MAIN PROCESSOR 2400 ← → MAIN MEMORY 2500

**EP 4 243 303 B1**

**Patent documents cited in the description**

- US 2020015171 A1